# FASCICULE DE BREVET EUROPEEN

(11) **EP 1 704 662 B1**
(45) Date de publication et mention de la délivrance du brevet: **18.05.2016**
(21) Numéro de dépôt: 04700264.7
(22) Date de dépôt: 06.01.2004
(51) Int. Cl.: H04J 14/02

(54) **DISPOSITIF DE SOUS-ECHANTILLONNAGE TEMPOREL D'UN SIGNAL OPTIQUE DE TYPE OTDM, CONVERTISSEUR OTDM-WDM COMPORTANT UN TEL DISPOSITIF ET CONVERTISSEUR WDM-OTDM**
VORRICHTUNG FÜR ZEITLICHE UNTERABTASTUNG EINES OTDM-SIGNALS, KONVERTER OTDM-WDM MIT SOLCH EINER VORRICHTUNG UND WDM-OTDM-KONVERTER
DEVICE FOR TEMPORAL SUBSAMPLING OF AN OTDM OPTICAL SIGNAL, OTDM-WDM CONVERTER COMPRISING SAME AND OTDM-WDM CONVERTER

(43) Date de publication de la demande: 27.09.2006
(73) Titulaire: Orange, 75015 Paris (FR)
(72) Inventeur: COQUILLE, René, F-22300 Lannion (FR); PINCEMIN, Erwan, F-22290 Gommenec'h (FR); GROT, Didier, F-22560 Pleumeur-Bodou (FR); LURON, Albert, F-22300 Rospez (FR)
(74) Mandataire: Regimbeau
(86) Numéro de dépôt international: PCT/FR2004/000009
(87) Numéro de publication internationale: WO 2005/076508

(56) Documents cités:
- EP-A- 1 137 213
- WO-A-03/007068
- LEUTHOLD J ET AL OPTICAL SOCIETY OF AMERICA / INSTITUTE OF ELECTRICAL AND ELECTRONICS ENGINEERS: "Linear all-optical wavelength conversion based an linear optical amplifier" OPTICAL FIBER COMMUNICATION CONFERENCE AND EXHIBIT. (OFC). TECHNICAL DIGEST. POSTCONFERENCE DIGEST. ANAHEIM, CA, MARCH 17 - 22, 2002, TRENDS IN OPTICS AND PHOTONICS SERIES. (TOPS), WASHINGTON, DC : OSA, US, vol. TOPS. VOL. 70, 17 mars 2002 (2002-03-17), pages 597-598, XP010618003 ISBN: 1-55752-701-6
- RAU L ET AL: "SIMULTANEOUS ALL-OPTICAL DEMULTIPLEXING OF A 40-GB/S SIGNAL TO 4 X 10 GB/S WDM CHANNELS USING AN ULTRAFAST FIBER WAVELENGTH CONVERTER" IEEE PHOTONICS TECHNOLOGY LETTERS, IEEE INC. NEW YORK, US, vol. 14, no. 12, décembre 2002 (2002-12), pages 1725-1727, XP001174690 ISSN: 1041-1135 cité dans la demande
- LEUTHOLD J ET AL: "Linear all-optical wavelength conversion based an linear optical amplifier", OPTICAL FIBER COMMUNICATIONS CONFERENCE. (OFC). POSTCONFERENCE TECHNICAL DIGEST. POSTDEADLINE PAPERS (IEEE CAT. NO.02CH37339) OPT SOC. AMERICA WASHINGTON, DC, USA; [TRENDS IN OPTICS AND PHOTONICS SERIES. (TOPS)], IEEE, vol. TOPS. VOL. 70, 17 March 2002 (2002-03-17), pages 597-598, XP010618003, DOI: 10.1109/OFC.2002.1036586 ISBN: 978-1-55752-701-1

## Description

La présente invention concerne un convertisseur de signal OTDM-WDM comportant un tel dispositif et un convertisseur WDM-OTDM

Un signal de type OTDM (de l'Anglais « Optical Time-Division Multiplexed ») s'entend d'un signal optique résultant d'un multiplexage temporel de signaux optiques d'origine.

Un signal de type WDM (de l'Anglais « Wavelength-Division Multiplexed ») s'entend d'un signal optique résultant d'un multiplexage en longueur d'onde de signaux optiques d'origine.

Un exemple utile pour comprendre l'invention concerne un dispositif de sous-échantillonnage temporel d'un signal optique de type OTDM à une fréquence de sous-échantillonnage prédéterminée, du type comportant :
- un générateur d'impulsions d'horloge émises à la fréquence de sous-échantillonnage prédéterminée et à une longueur d'onde de conversion ; et
- un dispositif de conversion de longueur d'onde recevant en entrée le signal optique de type OTDM et les impulsions d'horloge pour fournir en sortie un signal sous-échantillonné du signal optique à la longueur d'onde de conversion.

Un tel dispositif de sous-échantillonnage est décrit dans le document intitulé "Simultaneous All-Optical Demultiplexing of a 40-Gb/s Signal to 4 x 10 Gb/s WDM Channels Using an Ultrafast Fiber Wavelength Converter", de L. Rau et al. , publié dans IEEE PHOTONICS TECHNOLOGY LETTERS, volume 14, n°12, de Décembre 2002. Ce document décrit un dispositif de sous-échantillonnage temporel comportant un dispositif de conversion de longueur d'onde constitué d'un modulateur de phases croisées associé à un filtre WDM, tel qu'un routeur de guide d'onde en réseau (de l'anglais « arrayed wave-guide router »). Ce dispositif de sous-échantillonnage temporel est en général difficile à mettre en oeuvre et peu robuste face aux perturbations environnementales, telles que modifications de température, vibrations, etc.

L'invention concerne un convertisseur d'un signal optique de type WDM en un signal optique de type OTDM, le signal optique de type WDM étant constitué de plusieurs signaux optiques multiplexés, chacun étant transmis à une longueur d'onde qui lui est propre, le convertisseur comportant un générateur de signal continu émis à une longueur d'onde de conversion prédéterminée et au moins un dispositif de conversion de longueur d'onde recevant en entrée le signal continu et les signaux optiques multiplexés en longueur d'onde, pour fournir en sortie un signal optique de type OTDM émis à une fréquence temporelle multiple de la fréquence commune des signaux optiques multiplexés en longueur d'onde.

Un tel convertisseur est décrit dans le document intitulé "WDM to OTDM Multiplexing Using an Ultrafast All-Optical Wavelength Converter", de B-E. Olsson et al. , publié dans IEEE PHOTONICS TECHNOLOGY LETTERS, volume 13, n°9, de Septembre 2001. Ce document décrit un convertisseur WDM-OTDM comportant un dispositif de conversion de longueur d'onde constitué d'un modulateur de phases croisées associé à un filtre, tel qu'une fibre de Bragg. Ce convertisseur est également difficile à mettre en oeuvre et peu robuste face aux perturbations environnementales, telles que modifications de température, vibrations, etc.

Le document EP1137213 décrit aussi des convertisseurs OTDM-WDM et WDM-OTDM. Le dispositif de sous-échantillonnage temporel et le convertisseur précités ne sont en outre pas adaptés pour des signaux de type OTDM transmis à des fréquences de l'ordre de160 GHz ou plus.

L'invention vise à remédier à ces inconvénients en fournissant un convertisseur OTDM-WDM et un convertisseur WDM-OTDM simples et fiables, capables de fonctionner pour des signaux OTDM de 160 GHz ou plus.

Un exemple de dispositif de sous-échantillonnage temporel d'un signal optique de type OTDM à une fréquence de sous-échantillonnage prédéterminée, du type précité, caractérisé en ce que le dispositif de conversion comporte un amplificateur optique linéaire disposé de manière à recevoir le signal optique de type OTDM et les impulsions d'horloge en sens inverse de propagation, la puissance linéaire maximale de l'amplificateur étant réglée de manière à pouvoir être inférieure à la puissance de crête du signal optique de type OTDM, et un convertisseur de modulation de phase en modulation d'amplitude.

Un dispositif de sous-échantillonnage temporel selon l'exemple utile pour comprendre l'invention peut en outre comporter l'une ou plusieurs des caractéristiques suivantes :
- le convertisseur de modulation de phase en modulation d'amplitude comporte un interféromètre de Mach-Zehnder différentiel retardé ;
- le dispositif comporte un circulateur disposé entre l'amplificateur et le convertisseur de modulation, de telle sorte qu'il dirige le signal optique OTDM vers l'amplificateur et le signal sortant de l'amplificateur vers le convertisseur de modulation.

L'invention a pour objet un convertisseur d'un signal optique de type OTDM en un signal optique de type WDM, caractérisé en ce qu'il comporte une pluralité de dispositifs de sous-échantillonnage temporel tels que décrits précédemment montés en parallèle, chaque dispositif de sous-échantillonnage temporel comportant un générateur d'impulsions d'horloge émises à une fréquence de sous-échantillonnage prédéterminée et à une longueur d'onde de conversion propre au dispositif de sous-échantillonnage, et un dispositif de conversion de longueur d'onde recevant en entrée le signal optique de type OTDM et les impulsions d'horloge à la longueur d'onde de conversion propre au dispositif de sous-échantillonnage.

Enfin, l'invention a également pour objet un convertisseur d'un signal optique de type WDM en un signal optique de type OTDM, du type précité, caractérisé en ce que le dispositif de conversion comporte d'une part un amplificateur optique linéaire disposé de manière à recevoir le signal optique continu et les signaux optiques multiplexés en longueur d'onde en sens inverse de propagation, la puissance linéaire maximale de l'amplificateur étant réglée de manière à pouvoir être inférieure à la puissance de crête des signaux optiques multiplexés en longueur d'onde, et d'autre part un convertisseur de modulation de phase en modulation d'amplitude.

Un convertisseur WDM-OTDM selon l'invention peut en outre comporter l'une ou plusieurs des caractéristiques suivantes :
- Il comporte des moyens de décalage temporel des signaux optiques multiplexés en longueur d'onde les uns par rapport aux autres, et un unique dispositif de conversion recevant en entrée les signaux optiques multiplexés en longueur d'onde décalés temporellement ;
- Il comporte plusieurs dispositifs de conversion disposés en parallèle, chaque dispositif de conversion recevant en entrée l'un des signaux optiques multiplexés en longueur d'onde et étant associé à un dispositif de décalage temporel spécifique ;
- le convertisseur de modulation de phase en modulation d'amplitude comporte un interféromètre de Mach-Zehnder différentiel retardé ;
- il comporte au moins un circulateur disposé entre chaque amplificateur et chaque convertisseur de modulation, de telle sorte qu'il dirige les signaux optiques multiplexés en longueur d'onde vers l'amplificateur et le signal sortant de l'amplificateur vers le convertisseur de signal modulé.

Le couplage d'un amplificateur optique linéaire avec un convertisseur de modulation de phase en modulation d'amplitude, par exemple un interféromètre de Mach-Zehnder différentiel retardé, permet de réaliser une conversion de longueur d'onde en utilisant le principe de Kramers-Krönig. Selon ce principe, une modification de la densité des porteurs de charge dans l'amplificateur optique linéaire, qui a lieu lorsque cet amplificateur fonctionne dans sa partie non linéaire, entraîne un changement de l'indice de réfraction du milieu propagatif. Ainsi, lorsque la puissance de crête du signal à convertir est supérieure à la puissance linéaire maximale de l'amplificateur, c'est à dire lorsque le signal à convertir porte l'information binaire "1", le signal de conversion qui se propage en sens inverse dans l'amplificateur est déphasé. En revanche, lorsque la puissance de crête du signal à convertir est inférieure à la puissance linéaire maximale de l'amplificateur, c'est à dire lorsque le signal à convertir porte l'information binaire "0", le signal de conversion qui se propage en sens inverse dans l'amplificateur n'est pas déphasé. Le signal de conversion porte alors, en modulation de phase, l'information portée par le signal à convertir. Il traverse ensuite le convertisseur de modulation, pour porter l'information en modulation d'amplitude, comme le signal à convertir.

On a réalisé de la sorte une conversion de longueur d'onde simple qui permet de concevoir un convertisseur OTDM-WDM, et un convertisseur WDM-OTDM, entièrement optiques, simples et fonctionnant avec des signaux OTDM transitant à une fréquence au moins égale à 160 GHz.

L'invention sera mieux comprise à l'aide de la description qui va suivre, donnée uniquement à titre d'exemple et faite en référence aux dessins annexés dans lesquels :
- la figure 1 représente schématiquement la structure d'un dispositif de sous-échantillonnage ;
- la figure 2 représente schématiquement la structure d'un convertisseur OTDM-WDM selon l'invention ;
- la figure 3 représente schématiquement la structure d'un convertisseur WDM-OTDM selon un premier mode de réalisation de l'invention ; et
- la figure 4 représente schématiquement la structure d'un convertisseur WDM-OTDM selon un second mode de réalisation de l'invention.

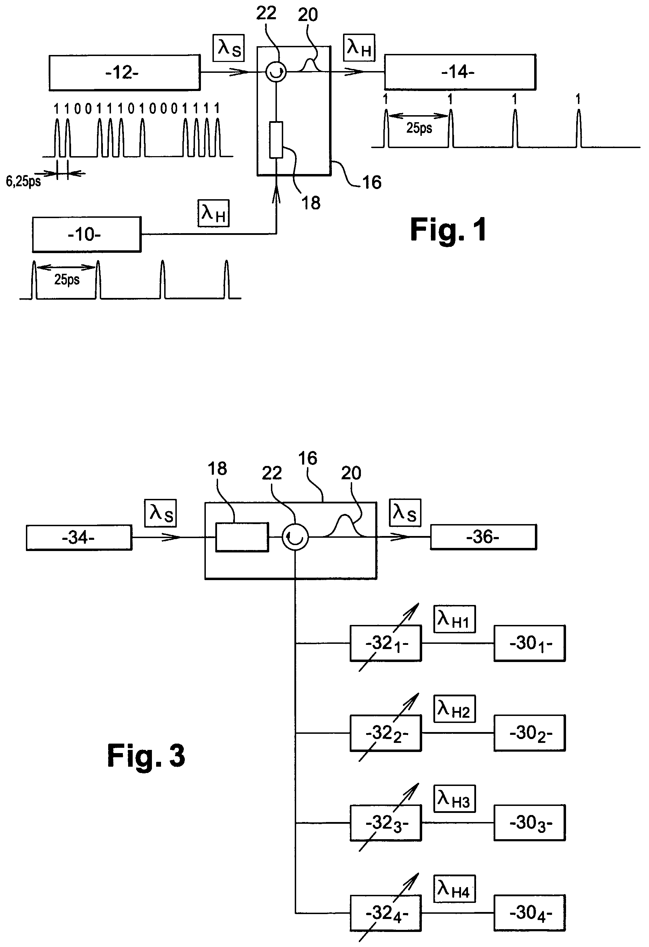

Le dispositif de sous-échantillonnage temporel représenté sur la figure 1 comporte un générateur 10 d'impulsions d'horloge émises à une fréquence de sous-échantillonnage prédéterminée, par exemple 40 Gb/s. De la sorte, les impulsions d'horloge émises sont espacées les unes des autres de 25 picosecondes. La longueur d'onde de ce train d'impulsions, appelée longueur d'onde de conversion, est également prédéterminée et prend par exemple une valeur λ_{H} = 1 544,5 nm.

Le dispositif comporte en outre un récepteur 12 de signal optique de type OTDM, c'est-à-dire résultant d'un multiplexage temporel de signaux optiques. Par exemple, ce signal optique est transmis à une fréquence de 160 GHz, c'est-à-dire que les impulsions sont espacées les unes des autres de 6,25 picosecondes.

Ce signal optique est par exemple transmis à une longueur d'onde λₛ = 1555,5 nm.

Ce signal optique de type OTDM est destiné à être sous-échantillonné et converti à la longueur d'onde de conversion du train d'impulsions émis par le générateur 10, pour fournir, en sortie du dispositif de sous-échantillonnage temporel, l'un des signaux multiplexés dans le signal optique OTDM. Pour cela, le dispositif de sous-échantillonnage comporte une interface de connexion 14 fournissant ce signal de sortie.

Enfin, le dispositif de sous-échantillonnage comporte un dispositif 16 de conversion de longueur d'onde recevant en entrée le signal optique de type OTDM et les impulsions d'horloge fournies par le générateur 10.

Le dispositif de conversion comporte un amplificateur optique linéaire 18 disposé de manière à recevoir le signal optique de type OTDM et les impulsions d'horloge en sens inverse de propagation.

A cet effet, une première borne de l'amplificateur optique linéaire 18 est directement raccordée à la sortie du générateur 10 d'impulsions d'horloge, alors qu'une seconde borne de cet amplificateur optique linéaire est raccordé à un circulateur 22 disposé entre le récepteur 12 et l'amplificateur 18, de manière à diriger le signal optique de type OTDM vers cette seconde borne.

La puissance linéaire maximale de l'amplificateur optique linéaire 18 est réglée de manière à pouvoir être inférieure à la puissance de crête du signal optique de type OTDM.

Enfin, le dispositif de conversion de longueur d'onde 16 comporte un convertisseur 20 de modulation de phase en modulation d'amplitude. De préférence, le convertisseur de modulation de phase en modulation d'amplitude est un interféromètre de Mach-Zehnder différentiel retardé.

Le circulateur 22 est disposé entre l'amplificateur optique linéaire 18 et ce convertisseur de modulation, de manière à diriger les signaux sortant de la seconde borne de l'amplificateur optique linéaire vers ce convertisseur de modulation.

Le dispositif décrit précédemment fonctionne de la façon suivante :
- lorsque la puissance de crête du signal optique de type OTDM est supérieure à la puissance linéaire maximale de l'amplificateur 18, c'est-à-dire lorsque le signal de type OTDM porte l'information binaire «1», et lorsque cette information binaire correspond à une impulsion d'horloge qui se propage en sens inverse dans l'amplificateur, celle-ci est déphasée (de préférence d'une valeur π);
- lorsque la puissance de crête du signal de type OTDM est inférieure à la puissance linéaire maximale de l'amplificateur 18, c'est-à-dire lorsque le signal de type OTDM porte l'information binaire « 0 », et lorsque cette information binaire correspond à une impulsion qui se propage en sens inverse dans l'amplificateur 18, celle-ci n'est pas déphasée ;
- le train d'impulsions traverse ensuite l'interféromètre de Mach-Zehnder différentiel retardé pour convertir la modulation de phase en modulation d'amplitude du signal sortant du dispositif de sous-échantillonnage temporel.

Le signal temporel obtenu en sortie est un signal sous-échantillonné au quart de la fréquence temporelle du signal de type OTDM, moyennant une conversion de longueur d'onde, de λₛ à λ_{H}.

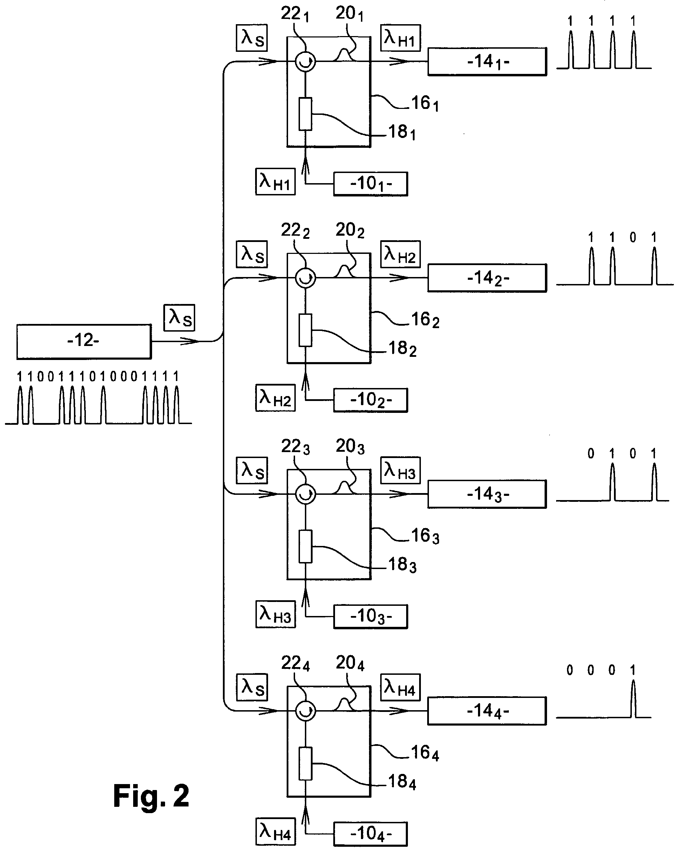

Le dispositif de sous-échantillonnage temporel décrit précédemment peut être utilisé pour réaliser un convertisseur OTDM-WDM, comme cela est représenté sur le montage de la figure 2.

Sur ce montage, plusieurs dispositifs de conversion de longueur d'onde 16₁, 16₂, 16₃, 16₄ identiques au dispositif 16 sont disposés en parallèle et sont tous reliés au récepteur 12.

Chaque dispositif de conversion 16ᵢ reçoit en outre sur la première borne de son amplificateur optique linéaire 18ᵢ, le signal fourni par un générateur 10ᵢ d'impulsions d'horloge émises à une fréquence égale au quart de la fréquence du signal optique de type OTDM fourni par le récepteur 12. Chaque générateur d'impulsions d'horloge 10ᵢ est décalé d'un temps-bit correspondant à la fréquence du signal optique OTDM, par rapport au générateur d'impulsions d'horloge 10ᵢ₋₁.

On obtient ainsi en sortie, sur quatre interfaces de connexion 14₁, 14₂, 14₃ et 14₄, quatre signaux représentant un sous-échantillonnage du signal optique de type OTDM au quart de sa fréquence. C'est-à-dire que si le signal de type OTDM résulte du multiplexage de quatre signaux temporels d'origine, ce montage permet d'obtenir en sortie les quatre signaux.

Chaque générateur d'impulsion d'horloge 10ᵢ génère des signaux à une longueur d'ondes qui lui est propre égale à λ_{Hi}.

Par exemple, λ_{H1} = 1544,5 nm, λ_{H2} = 1 546,3 nm, λ_{H3} = 1 548,1 nm, λ_{H4} = 1 549,9 nm. Les quatre signaux sous-échantillonnés obtenus peuvent alors être recombinés pour obtenir un signal multiplexé de type WDM.

On a ainsi réalisé un convertisseur d'un signal optique de type OTDM en un signal optique de type WDM.

En utilisant le même principe, on peut réaliser un convertisseur WDM-OTDM, comme cela est représenté sur le montage de la figure 3, selon un premier mode de réalisation de l'invention.

Comme les montages précédents, le montage représenté sur cette figure comporte un dispositif 16 de conversion de longueur d'onde comportant un amplificateur optique linéaire 18, un circulateur 22 et un interféromètre de Mach-Zehnder différentiel retardé 20.

Dans ce montage, la première borne de l'amplificateur optique linéaire 18 est raccordée à un générateur 34 de signal continu émis à une longueur d'onde de conversion prédéterminée, par exemple λₛ = 1 555,5 nm.

Le circulateur 22, disposé entre l'amplificateur optique linéaire 18 et l'interféromètre de Mach-Zehnder différentiel retardé 20 est également relié à des moyens de fourniture d'un signal optique de type WDM, c'est-à-dire un signal optique constitué de plusieurs signaux optiques multiplexés en longueur d'onde, chacun étant transmis à une longueur d'onde qui lui est propre.

Les moyens de fournitures sont constitués de moyens 30₁, 30₂, 30₃ et 30₄ de réception des signaux optiques multiplexés montés en parallèle, et chacun associé à un retardateur 32₁, 32₂, 32₃ et 32₄.

Ces retardateurs permettent de décaler temporellement les signaux optiques multiplexés issus des moyens 30₁, 30₂, 30₃ et 30₄, d'un temps-bit équivalent à la fréquence multiple souhaitée en sortie du signal optique de type OTDM. Dans le cas représenté, cette fréquence est égale à quatre fois la fréquence temporelle des signaux optiques multiplexés d'origine, puisque le signal WDM est constitué de quatre signaux d'origine.

En sortie du convertisseur WDM-OTDM, une interface de connexion 36 fournit un signal optique de type OTDM à la fréquence temporelle multiple souhaitée et à la longueur d'onde λs.

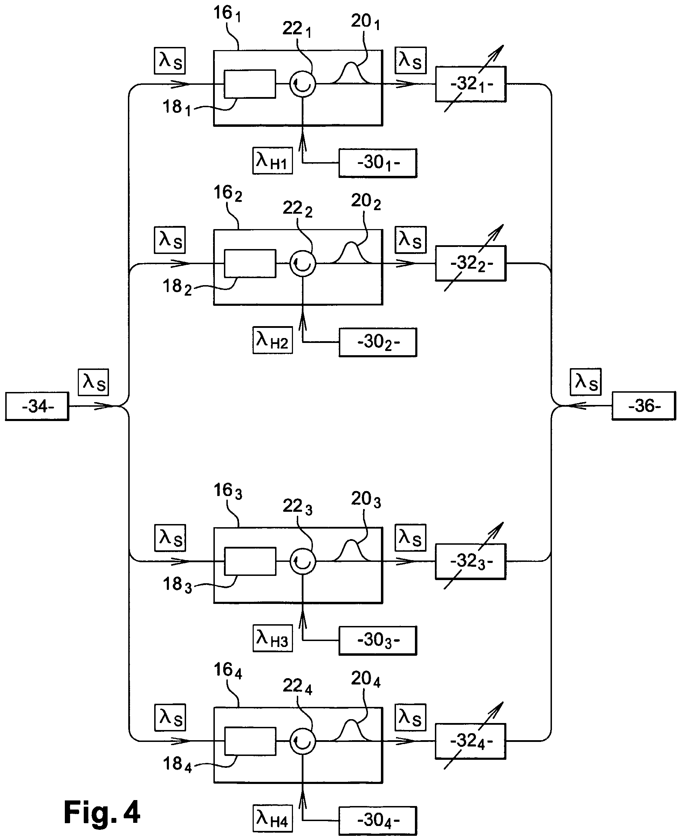

Un autre mode de réalisation de ce convertisseur WDM-OTDM est représenté sur la figure 4.

Sur cette figure, on a disposé en parallèle autant de dispositifs 16₁, 16₂, 16₃ et 16₄ de conversion de longueur d'onde que de moyens 30₁, 30₂, 30₃, et 30₄ de fourniture des signaux optiques multiplexés en longueur d'ondes.

Dans cette configuration, les retardateurs 32₁, 32₂, 32₃ et 32₄ peuvent être disposés en sortie de chacun des dispositifs de conversion de longueur d'onde, avant que les signaux de sortie ne soient combinés entre eux pour fournir le signal de type OTDM souhaité.

Il apparaît clairement que les dispositifs décrits précédemment permettent de réaliser des sous-échantillonnages temporels, des conversions WDM-OTDM et des conversions OTDM-WDM de façon simple et en utilisant des dispositifs tout optique. L'association d'un amplificateur optique linéaire avec un interféromètre de Mach-Zehnder différentiel retardé permet en outre de traiter des signaux à fréquences très élevées, par exemple des fréquences supérieures à 160 GHz pour le signal optique de type OTDM.

## Revendications

1. Convertisseur d'un signal optique de type OTDM en un signal optique de type WDM comprenant une pluralité de dispositifs, montés en parallèle, de sous-échantillonnage temporel du signal optique de type OTDM à une fréquence de sous-échantillonnage prédéterminée, chaque dispositif de sous-échantillonnage temporel comportant :
- un générateur (10₁, 10₂, 10₃, 10₄) d'impulsions d'horloge émises à la fréquence de sous-échantillonnage prédéterminée et à une longueur d'onde de conversion (λ_{H1}, λ_{H2}, λ_{H3}, λ_{H4}) propre au dispositif de sous-échantillonnage,
- un dispositif (16₁, 16₂, 16₃, 16₄) de conversion de longueur d'onde recevant en entrée le signal optique de type OTDM et les impulsions d'horloge à la longueur d'onde de conversion (λ_{H1}, λ_{H2}, λ_{H3}, λ_{H4}) propre au dispositif de sous-échantillonnage, pour fournir en sortie un signal sous-échantillonné du signal optique à la longueur d'onde de conversion, le dispositif (16₁, 16₂, 16₃, 16₄) de conversion comportant :
• un amplificateur optique linéaire (18₁, 18₂, 18₃, 18₄) disposé de manière à recevoir le signal optique de type OTDM et les impulsions d'horloge en sens inverse de propagation, la puissance linéaire maximale de l'amplificateur étant réglée de manière à pouvoir être inférieure à la puissance de crête du signal optique de type OTDM,
• un convertisseur (20₁, 20₂, 20₃, 20₄) de modulation de phase en modulation d'amplitude.

2. Convertisseur d'un signal optique de type OTDM en un signal optique de type WDM selon la revendication 1, dans lequel le convertisseur (20₁, 20₂, 20₃, 20₄) de modulation de phase en modulation d'amplitude comporte un interféromètre de Mach-Zehnder différentiel retardé.

3. Convertisseur d'un signal optique de type OTDM en un signal optique de type WDM selon la revendication 1 ou 2, comportant un circulateur (22) disposé entre l'amplificateur (18₁, 18₂, 18₃, 18₄) et le convertisseur de modulation (20₁, 20₂, 20₃, 20₄), de telle sorte qu'il dirige le signal optique OTDM vers l'amplificateur (18₁, 18₂, 18₃, 18₄) et le signal sortant de l'amplificateur (18₁, 18₂, 18₃, 18₄) vers le convertisseur de modulation (20₁, 20₂, 20₃, 20₄).

4. Convertisseur selon l'une des revendications 1 à 3, dans lequel chaque générateur d'impulsions d'horloge est décalé par rapport à un autre générateur d'impulsions d'horloge d'un temps correspondant à la fréquence du signal optique OTDM.

5. Convertisseur d'un signal optique de type WDM en un signal optique de type OTDM, le signal optique de type WDM étant constitué de plusieurs signaux optiques multiplexés en longueur d'onde, chacun étant transmis à une longueur d'onde qui lui est propre, comprenant
- un générateur (34) de signal continu émis à une longueur d'onde (λ_{S}) de conversion prédéterminée,
- une pluralité de dispositifs (16₁, 16₂, 16₃, 16₄) de conversion de longueur d'onde disposés en parallèle, chaque dispositif de conversion recevant en entrée le signal continu et l'un des signaux optiques multiplexés en longueur d'onde, pour fournir en sortie sur une interface de connexion le signal optique de type OTDM émis à une fréquence temporelle multiple de la fréquence commune des signaux optiques multiplexés en longueur d'onde, chaque dispositif de conversion comportant :
• un amplificateur optique linéaire (18 ; 18₁, 18₂, 18₃, 18₄) disposé de manière à recevoir le signal optique continu et le signal optique multiplexé en longueur d'onde en sens inverse de propagation, la puissance linéaire maximale de l'amplificateur étant réglée de manière à pouvoir être inférieure à la puissance de crête du signal optique multiplexé en longueur d'onde, et
• un convertisseur de modulation de phase en modulation d'amplitude (20 ; 20₁, 20₂, 20₃, 20₄).

6. Convertisseur selon la revendication 5, comprenant une pluralité de dispositifs de décalage temporel (32₁, 32₂, 32₃, 32₄) associés chacun spécifiquement à un dispositif (16₁, 16₂, 16₃, 16₄) de conversion.

7. Convertisseur d'un signal optique de type WDM en un signal optique de type OTDM selon la revendication 5 ou 6, dans lequel le convertisseur (20 ; 20₁, 20₂, 20₃, 20₄) de modulation de phase en modulation d'amplitude comporte un interféromètre de Mach-Zehnder différentiel retardé.

8. Convertisseur d'un signal optique de type WDM en un signal optique de type OTDM selon l'une quelconque des revendications 5 à 7, comportant au moins un circulateur (22 ; 22₁, 22₂, 22₃, 22₄) disposé entre chaque amplificateur et chaque convertisseur de modulation, de telle sorte qu'il dirige les signaux optiques multiplexés en longueur d'onde vers l'amplificateur et le signal sortant de l'amplificateur vers le convertisseur de signal modulé.

## Patentansprüche

1. Konverter eines optischen OTDM-Signals in ein optisches WDM-Signal, umfassend eine Vielzahl von parallel montierten Vorrichtungen zur zeitlichen Unterabtastung des optischen OTDM-Signals auf einer vorbestimmten Unterabtastfrequenz, wobei jede Vorrichtung zur zeitlichen Unterabtastung umfasst:
- einen Generator (10₁, 10₂, 10₃, 10₄) von Zeitimpulsen, die auf der vorbestimmten Unterabtastfrequenz und mit einer eigenen Konversionswellenlänge λ_{H1}, λ_{H2}, λ_{H3}, λ_{H4}) der Unterabtastvorrichtung entsandt werden,
- eine Vorrichtung (16₁, 16₂, 16₃, 16₄) zur Wellenlängenkonversion, die am Eingang das optische OTDM-Signal und die Zeitimpulse mit der eigenen Konversionswellenlänge λ_{H1}, λ_{H2}, λ_{H3}, λ_{H4}) der Unterabtastvorrichtung empfängt, um am Ausgang ein unterabgetastetes Signal des optischen Signals mit der Konversionswellenlänge zu liefern, wobei die Konversionsvorrichtung (16₁, 16₂, 16₃, 16₄) umfasst:
* einen linearen optischen Verstärker (18₁, 18₂, 18₃, 18₄), der derart angeordnet ist, dass er das optische OTDM-Signal und die Zeitimpulse in umgekehrter Ausbreitungsrichtung empfängt, wobei die maximale lineare Leistung des Verstärkers derart eingestellt ist, dass sie niedriger als die Spitzenleistung des optischen OTDM-Signals sein kann,
* einen Konverter (20₁, 20₂, 20₃, 20₄) von Phasenmodulation in Amplitudenmodulation.

2. Konverter eines optischen OTDM-Signals in ein optisches WDM-Signal nach Anspruch 1, bei dem der Konverter (20₁, 20₂, 20₃, 20₄) von Phasenmodulation in Amplitudenmodulation ein verzögertes Mach-Zehnder-Differential-Interferometer umfasst.

3. Konverter eines optischen OTDM-Signals in ein optisches WDM-Signal nach Anspruch 1 oder 2, umfassend einen Zirkulator (22), der zwischen dem Verstärker (18₁, 18₂, 18₃, 18₄) und dem Modulationskonverter (20₁, 20₂, 20₃, 20₄) derart angeordnet ist, dass er das optische OTDM-Signal zu dem Verstärker (18₁, 18₂, 18₃, 18₄) und das aus dem Verstärker (18₁, 18₂, 18₃, 18₄) austretende Signal zu dem Modulationskonverter (20₁, 20₂, 20₃, 20₄) lenkt.

4. Konverter nach einem der Ansprüche 1 bis 3, bei dem jeder Generator von Zeitimpulsen in Bezug zu einem weiteren Generator von Zeitimpulsen um eine Zeit entsprechend der Frequenz des optischen OTDM-Signals versetzt ist.

5. Konverter eines optischen WDM-Signals in ein optisches OTDM-Signal, wobei das optische WDM-Signal aus mehreren wellenlängengemultiplexten optischen Signalen besteht, wobei jedes mit einer Wellenlänge, die ihm eigen ist, übertragen wird, umfassend:
- einen Generator (34) eines kontinuierlichen Signals, das mit einer vorbestimmten Konversionswellenlänge (λ_{S}) entsandt wird,
- eine Vielzahl von Vorrichtungen (16₁, 16₂, 16₃, 16₄) zur Wellenlängenkonversion, die parallel angeordnet sind, wobei jede Konversionsvorrichtung am Eingang das kontinuierliche Signal und eines der wellenlängengemultiplexten optischen Signale empfängt, um am Ausgang an einer Anschlussschnittstelle das optische OTDM-Signal zu liefern, das mit einer multiplen Zeitfrequenz der gemeinsamen Frequenz der wellenlängengemultiplexten optischen Signale entsandt wird, wobei jede Konversionsvorrichtung umfasst:
* einen linearen optischen Verstärker (18; 18₁, 18₂, 18₃, 18₄), der derart angeordnet ist, dass er das kontinuierliche optische Signal und das wellenlängengemultiplexte optische Signal in umgekehrter Ausbreitungsrichtung empfängt, wobei die maximale lineare Leistung des Verstärkers derart eingestellt ist, dass sie niedriger als die Spitzenleistung des wellenlängengemultiplexten optischen Signals sein kann,
* einen Konverter von Phasenmodulation in Amplitudenmodulation (20; 20₁, 20₂, 20₃, 20₄).

6. Konverter nach Anspruch 5, umfassend eine Vielzahl von Vorrichtungen für zeitlichen Versatz (32₁, 32₂, 32₃, 32₄), die jeweils spezifisch mit einer Konversionsvorrichtung (16₁, 16₂, 16₃, 16₄) verbunden sind.

7. Konverter eines optischen WDM-Signals in ein optisches OTDM-Signal nach Anspruch 5 oder 6, bei dem der Konverter (20; 20₁, 20₂, 20₃, 20₄) von Phasenmodulation in Amplitudenmodulation ein verzögertes Mach-Zehnder-Differential-Interferometer umfasst.

8. Konverter eines optischen WDM-Signals in ein optisches OTDM-Signal nach einem der Ansprüche 5 bis 7, umfassend mindestens einen Zirkulator (22; 22₁, 22₂, 22₃, 22₄), der zwischen jedem Verstärker und jedem Modulationskonverter derart angeordnet ist, dass er die wellenlängengemultiplexten optischen Signale zu dem Verstärker und das aus dem Verstärker austretende Signal zu dem Konverter eines modulierten Signals lenkt.

## Claims

1. Converter of an OTDM optical signal into a WDM optical signal comprising a plurality of devices, mounted in parallel, for the temporal subsampling of the OTDM optical signal at a predetermined subsampling frequency, each temporal subsampling device comprising:
- a generator (10₁, 10₂, 10₃, 10₄) of clock pulses emitted at the predetermined subsampling frequency and at a conversion wavelength (λ_{H1}, λ_{H2}, λ_{H3}, λ_{H4}) specific to the subsampling device,
- a wavelength conversion device (16₁, 16₂, 16₃, 16₄) receiving as input the OTDM optical signal and the clock pulses at the conversion wavelength (λ_{H1}, λ_{H2,} λ_{H3}, λ_{H4}) specific to the subsampling device, to supply as output a subsampled signal of the optical signal at the conversion wavelength, the conversion device (16₁, 16₂, 16₃, 16₄) comprising:
• a linear optical amplifier (18₁, 18₂, 18₃, 18₄) arranged so as to receive the OTDM optical signal and the clock pulses in the reverse direction of propagation, the maximum linear power of the amplifier being set so as to be able to be lower than the peak power of the OTDM optical signal,
• a phase modulation to amplitude modulation converter (20₁, 20₂, 20₃, 20₄).

2. Converter of an OTDM optical signal into a WDM optical signal according to Claim 1, in which the phase modulation to amplitude modulation converter (20₁, 20₂, 20₃, 20₄) comprises a delayed differential Mach-Zehnder interferometer.

3. Converter of an OTDM optical signal into a WDM optical signal according to Claim 1 or 2, comprising a circulator (22) arranged between the amplifier (18₁, 18₂, 18₃, 18₄) and the modulation converter (20₁, 20₂, 20₃, 20₄), such that it directs the OTDM optical signal to the amplifier (18₁, 18₂, 18₃, 18₄) and the signal outgoing from the amplifier (18₁, 18₂, 18₃, 18₄) to the modulation converter (20₁, 20₂, 20₃, 20₄).

4. Converter according to one of Claims 1 to 3, in which each clock pulse generator is offset relative to another clock pulse generator by a time corresponding to the frequency of the OTDM optical signal.

5. Converter of a WDM optical signal into an OTDM optical signal, the WDM optical signal consisting of a plurality of wavelength-multiplexed optical signals, each being transmitted at a wavelength that is specific to it, comprising
- a generator (34) of continuous signal emitted at a predetermined conversion wavelength (λ₅),
- a plurality of wavelength conversion devices (16₁, 16₂, 16₃, 16₄) arranged in parallel, each conversion device receiving as input the continuous signal and one of the wavelength-division multiplexed optical signals, to supply as output, over a connection interface, the OTDM optical signal emitted at a temporal frequency that is a multiple of the common frequency of WDM optical signals, each conversion device comprising:
• a linear optical amplifier (18; 18₁, 18₂, 18₃, 18₄) arranged so as to receive the continuous optical signal and the wavelength-division multiplexed optical signal in the reverse direction of propagation, the maximum linear power of the amplifier being set so as to be able to be lower than the peak power of the wavelength-division multiplexed optical signal, and
• a phase modulation to amplitude modulation converter (20₁, 20₂, 20₃, 20₄).

6. Converter according to Claim 5, comprising a plurality of time shift devices (32₁, 32₂, 32₃, 32₄) each associated specifically with a conversion device (16₁, 16₂, 16₃, 16₄).

7. Converter of a WDM optical signal into an OTDM optical signal according to Claim 5 or 6, in which the phase modulation to amplitude modulation converter (20; 20₁, 20₂, 20₃, 20₄) comprises a delayed differential Mach-Zehnder interferometer.

8. Converter of a WDM optical signal into an OTDM optical signal according to any one of Claims 5 to 7, comprising at least one circulator (22; 22₁, 22₂, 22₃, 22₄) arranged between each amplifier and each modulation converter, such that it directs the wavelength-division multiplexed optical signals to the amplifier and the signal outgoing from the amplifier to the modulated signal converter.
